(19) Europäisches Patentamt

European Patent Office

Office européen des brevets

(11) Publication number: **0 351 877 B1**

(12) **EUROPEAN PATENT SPECIFICATION**

(45) Date of publication of patent specification: **30.12.92**    (51) Int. Cl.⁵: **E05F  15/06**

(21) Application number: **89113463.7**

(22) Date of filing: **21.07.89**

---

(54) **Device for operating and guiding a vehicle door, particularly of a motor bus.**

---

(30) Priority: **22.07.88 IT 5331588 U**

(43) Date of publication of application:
**24.01.90 Bulletin  90/04**

(45) Publication of the grant of the patent:
**30.12.92 Bulletin  92/53**

(84) Designated Contracting States:
**CH DE ES FR GB IT LI NL SE**

(56) References cited:
**DE-C- 819 781**
**FR-A- 2 577 271**
**US-A- 3 435 877**
**US-A- 4 346 931**

(73) Proprietor: **IVECO FIAT S.p.A.**
**Via Puglia 35**
**I-10156 Torino(IT)**

(72) Inventor: **Chicarella, Mauro**
**Frazione Revignano 219/B**
**I- 14100 Asti(IT)**

(74) Representative: **Bongiovanni, Guido et al**
**STUDIO TORTA Società Semplice Via Viotti 9**
**I-10121 Torino(IT)**

EP 0 351 877 B1

Rank Xerox (UK) Business Services

## Description

This invention relates to a device for operating and guiding a vehicle door in accordance with the preamble of claim 1, particularly of a motor bus or other public passenger transport vehicle.

The doors of vehicles of the aforesaid type generally comprise either four folding leaves or two rotary-sliding leaves. In the case of folding doors, each half door comprises a support leaf rigid with its hinge pivots and a suspended leaf hinged to the support leaf. The half doors are operated and guided by a device comprising a support base disposed above the door compartment, two cylinders connected to said support base and acting on respective levers rigid with the hinge pivots, and a longitudinal guide fixed lowerly to the support base and slidingly engaged by a pair of wheels rotatable on pins rigid with the respective driven leaves.

In the case of rotary-sliding doors, the leaves are hinged in an approximately central position to respective arms rigid with the hinge pivots and are operated and guided by a substantially analogous device.

The need for correct operation in the case of folding doors and for protection against accidental opening by loads concentrated on the end of the leaves in the case of rotary-sliding doors means that the required geometrical constraints are incompatible with each other, with the result that the guide position must be different in the two cases.

This means that when fitting out the motor bus, the guide must be applied in different positions according to the type of door to be mounted. A device for operating and guiding a vehicle door as set forth in the preamble of claim 1 is disclosed in DE-C-819 781.

The object of the present invention is to provide a device for operating and guiding a vehicle door which can be used both for folding doors and for rotary-sliding doors.

Said object is attained according to the present invention by a device for operating and guiding a vehicle door, of the type comprising a support structure to be mounted in the upper region of the door housing compartment provided in a body side of said vehicle, at least one pneumatic cylinder connected to said support structure and arranged to rotate a hinge pivot of a leaf of said door, guide means secured lowerly to said support structure and able to slidingly house a corresponding guide element of said door so as to guide it along a slide surface parallel to said body side, and means for fixing said guide means to said support structure, characterised in that said guide means comprise a section bar provided with a fixing portion and a guide portion defining a channel parallel to but asymmetric about the longitudinal plane of symmetry through said fixing means, a longitudinal middle surface of said channel defining said slide surface of said guide element of said door, said section bar being fixable to said support structure in two positions, of which one is rotated through 180°C from the other about a vertical axis and which define two different distances of said slide surface from the outer profile of said body side of said vehicle.

The present invention will be more apparent from the description of a preferred embodiment thereof given hereinafter by way of non-limiting example with reference to the accompanying drawings, in which:

Figure 1 is a diagrammatic plan view of a folding door;

Figure 2 is a diagrammatic plan view of a door with rotary-sliding leaves;

Figure 3 is a diagrammatic plan view of a device for operating and guiding a door of the type shown in Figure 1 or 2, constructed in accordance with the present invention;

Figures 4 and 5 are sectional views to a enlarged scale showing a detail of the device of Figure 3 in two different mounting configurations, applied respectively to a folding door and to a rotary-sliding leaf door respectively.

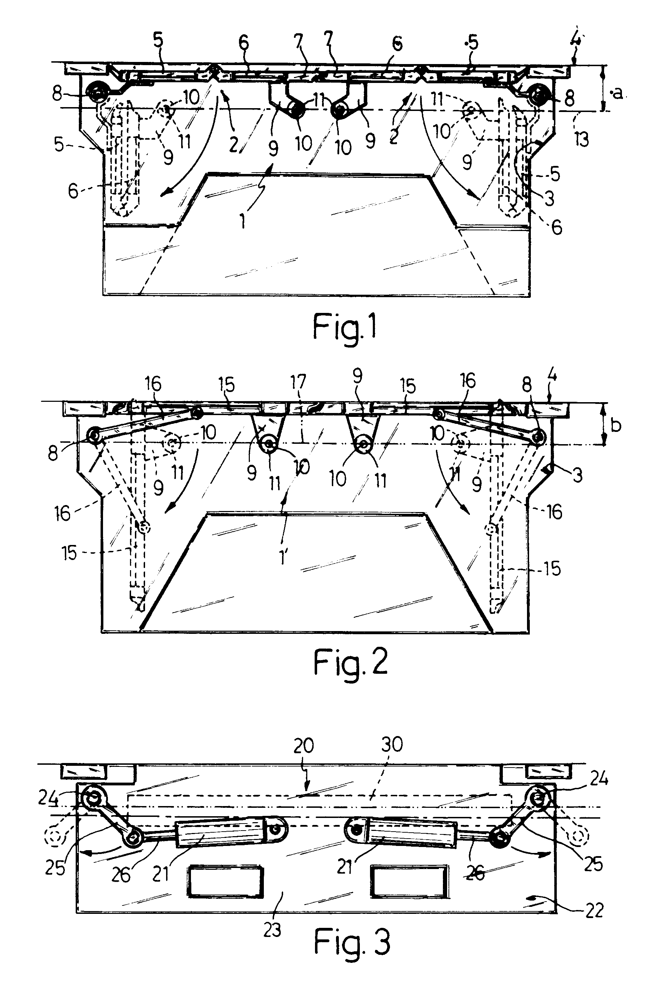

In Figure 1 the reference numeral 1 indicates overall a folding door for a motor bus.

The door 1 comprises two half doors 2 housed in a door compartment 3 provided in a body side 4 of the motor bus.

Said half doors 2 consist of respective support leaves 5, and driven leaves 6 hinged to the support leaves 5 and disposed so that when the door is closed they mate with respective side edges 7, conveniently provided with gaskets of soft material, not shown.

The support leaves 5 are rigid with respective rotatable hinge pivots B disposed on the sides of the door compartment 3. To an upper inner region of each of the driven leaves 6, in a proximity to the respective edge 7, there is fixed a support bracket 9 for a pin 10 of vertical axis, on which a wheel 11 is rotatably mounted.

The wheels 11 are constrained to slide horizontally along a surface 13 parallel to the body side 4. The distance of the surface 13 from the outer profile of the body side 4 is indicated by "a". The two half doors 2 are opened by rotating the hinge pivots 8 in the direction indicated by the arrows, using a control device described in detail hereinafter. As said hinge pivots 8 rotate and the wheels 11 are guided along the surface 13, the half doors 2 fold to assume the position shown by dashed lines. The door is closed by rotating the hinge pivots 8 in the opposite direction. The distance "a" obviously influences the position assumed by the half doors 2 when closed and open. Specifically, the distance between the wheels 11 when in the closed position reduces as "a" reduces. During the initial opening of the half doors 2 and until the hinging axes between the support leaves 5 and driven leaves 6 pass beyond the respective planes containing the axes of the pin 10 and of the hinge pivot 8 of the respective half door 2, the wheels 11 approach each other, and therefore said distance must necessarily be greater than a minimum value, below which there would be interference between the wheels 11 during the initial opening of the half doors 2.

Figure 2 shows a door 1' comprising two rotary-sliding half doors or leaves 15. Said door 1' is described hereinafter using the sail reference numerals to indicate parts equal or corresponding to parts already described with reference to Figure 1. The leaves are connected to respective hinge pivots 8 by respective bars 16 rigid at one end with the hinge pivots 8 and hinged at their other end to the upper central region of the leaves 15. To an upper inner region of each of the leaves 15, in proximity to the respective edge 7, there is fixed a support bracket 9 for a pin 10 of vertical axis, on which a wheel 11 is rotatably mounted. The wheels 11 are constrained to slide along a surface 17 parallel to the body side 4. The distance of the surface 17 from the outer profile of the body side 4 is indicated by "b". Again in this case the leaves 15 are opened by rotating the hinge pivots 8.

Because of the force exerted by the bars 16 and the fact that the wheels 11 are guided along the surface 17, the leaves 15 rotate about the axis of the respective pins 10 of the wheels 11 while simultaneously sliding along the direction of the surface 17, to reach their open position as shown by dashed lines in Figure 2.

The distance "b" cannot be increased indefinitely at the design stage because it would result in an excessive distance between the wheels 11 when the door 1' is closed and thus involve the risk that a load applied to the leaves 15 at their edge 7 could cause them to rotate about the wheels 11 and thus accidentally open.

Figure 3 diagrammatically illustrates a device for controlling the opening of the doors 1 or 1'.

This device, indicated overall by 20, comprises substantially a pair of pneumatic cylinders 21 which are housed in a compartment 22 disposed above the door compartment 3 and are hinged to a support base 23 which separates said compartment from the door compartment 3. The support base 23 comprises two lateral through seats, not shown, through which the upper ends 24 of the hinge pivots 8 penetrate into the compartment 22. On said ends 24 of the hinge pivots 8 there are fixed respective cranks 25 which are hinged to respective rods 26 of the cylinders 21.

The said geometrical conditions which the distances "a" and "b" must satisfy, for equal dimensions of the door compartment 3, are substantially incompatible with each other. Consequently, the guide axes 13 and 17 of the wheels 11 of the half doors 2 and 15, ie the folding and rotary-sliding doors respectively, are distinct as can be seen schematically in Figure 3.

According to the present invention, the control device 20 comprises bivalent guide means, ie able to form both the surface 13 for the folding half doors and the surface 17 for the rotary-sliding half doors 15, by simply varying the mounting configuration.

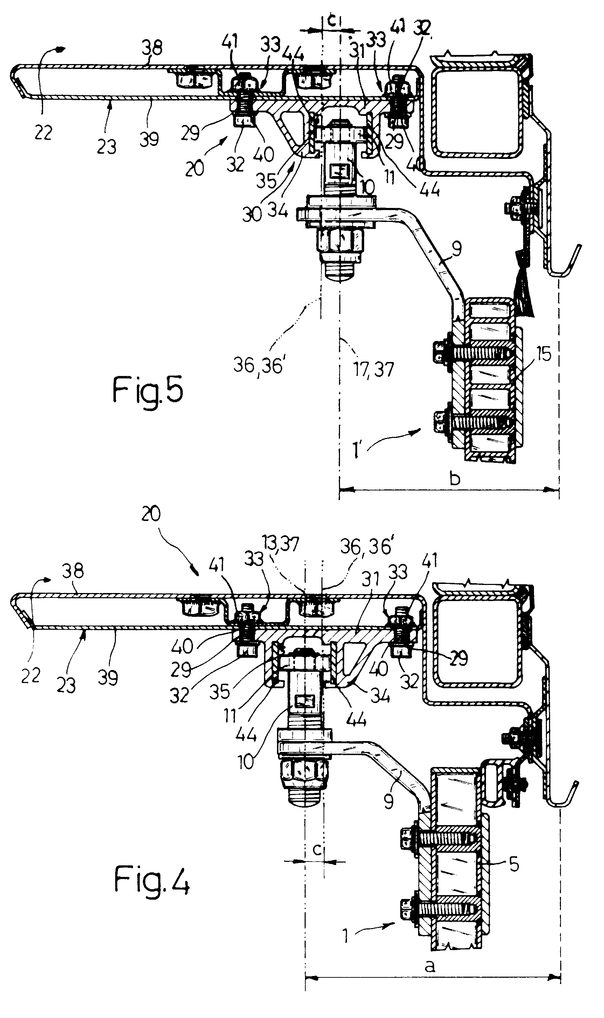

Said guide means comprise specifically a section bar 30 (Figures 4 and 5) conveniently extruded of aluminium alloy, comprising a substantially flat fixing portion 31 provided with a plurality of through holes 29 and fixed to the support base 23 by a plurality of screws 32 which pass through said holes 29 and are screwed into respective seats 33 in the base 23, and a guide portion 34 of substantially rectangular trapezium cross-section with its minor base facing downwards. The holes 29 are disposed, symmetrically about a vertical longitudinal plane 36, in two parallel rows in correspondence with lateral regions of the fixing portion 31 which project from the guide portion 34. The seats 33 are disposed symmetrically about a vertical plane 36' parallel to the body side 4 of the motor bus and disposed at a distance from the body profile equal to the mean of the distances "a" and "b" as heretofore described. Within the guide portion 34 in correspondence with its said minor base there is provided a channel 35 having a substantially rectangular cross-section which is asymmetric about the plane 36. Specifically, the distance between the vertical central plane 37 through the channel 35 and said plane 36, indicated in the figure by "c", is equal to one half the difference between the distances "a" and "b".

Consequently, by mounting the section bar 30 in the two possible positions in which the plane 36 coincides with the plane 36', shown respectively in Figures 4 and 5 and obtained by rotating it through 180° about a vertical axis, the plane 37 coincides with the plane 13 and with the plane 17 respectively. Thus two different configurations of the control device 20 are obtained, these being suitable for a folding door 1 (Figure 4) and for a door with rotary-sliding leaves 15 (Figure 5) respectively.

As is clearly seen from Figures 4 and 5, the support base 23 conveniently has a box structure obtained by welding together two shaped plates 38, 39, the seats 32 comprising a respective through hole 40 in the lower plate 39 and a respective threaded nut 41 welded to the inside of the plate 39 in correspondence with said hole 40.

To the sides of the channel 35, the section bar 30 comprises respective seats housing two strips 44 of material with a low coefficient of friction, and between which the wheels 11 run. To prevent any possibility of seizure of the wheels 11, which would result in them slipping instead of rolling and so producing irregular wear, they are conveniently constructed of steel and mounted on their pins by way of rolling-contact bearings, not shown. The strips 44 are conveniently of a softer material, such as a plastics material.

The advantages of the device 20 constructed in accordance with the present invention are apparent from an examination of its characteristics.

In particular, the device 20 can be used in combination with folding doors or doors with rotary-sliding leaves without any modification and without varying the vehicle assembly cycle, but simply by mounting one element (the section bar 30) in a rotated position and using for this purpose the same fixing means (screws 32 and seats 33) in the two versions.

## Claims

1. A device for operating and guiding a vehicle door (1), of the type comprising a support structure (23) to be mounted in the upper region of the door housing compartment (22) provided in a body side of said vehicle, at least one pneumatic cylinder (21) connected to said support structure (23) and arranged to rotate a hinge pivot (8) of a leaf of said door (1), guide means secured lowerly to said support structure (23) and able to slidingly house a corresponding guide element (11) of said door (1) so as to guide it along a slide surface parallel to said body side, and means for (29,32,33) fixing said guide means to said support structure (23), characterised in that said guide means comprise a section bar (30) provided with a fixing portion (31) and a guide portion (34) defining a channel (35) parallel to and asymmetric about the longitudinal plane of symmetry (36, 36') through said fixing means (29, 32, 33), a longitudinal middle surface (37) of said channel defining said slide surface (13, 17) of said guide element (11) of said door (1, 1'), said section bar (30) being fixable to said support structure (23) in two positions, of which the one is rotated through 180°C from the other about a vertical axis and which define two different distances (a, b) of said slide surface (13, 17) from the outer profile of said body side (4) of said vehicle.

2. A device as claimed in claim 1, characterised in that said fixing means comprise a plurality of holes (29) provided in said fixing portion (31), corresponding seats (33) provided in said support structure (23), and screws (32) passing through said holes and screwed into said seats (33).

3. A device as claimed in claim 1 or 2, characterised in that said fixing portion (31) is of substantially flat shape, said guide portion (34) having a cross-section substantially in the form of a rectangular trapezium with its minor base facing downwards, and in correspondence with which said channel (35) is provided.

4. A device as claimed in one of the preceding claims, characterised by comprising a pair of strips (44) of low coefficient of friction disposed internally on the sides of said channel (35) and cooperating with said guide element (11) of the door (1, 1').

5. A device as claimed in any one of the preceding claims, characterised in that said holes (29) are disposed in two parallel rows along respective lateral regions of said fixing portion (31) which project from said guide portion (34) of said section bar (30).

6. A device as claimed in any one of the preceding claims, characterised in that said support structure comprises a substantially flat support base (23) of box structure.

7. A device as claimed in claim 6, characterised in that said seats (33) comprise a plurality of through holes (40) provided in the lower wall (39) of said support base (23) and a plurality of corresponding threaded nuts (41) welded to the inside of said wall (39) in correspondence with said holes (41).

8. A device as claimed in any one of the preceding claims, characterised by comprising two cylinders (21) for operating respective half doors (2, 15) of said door (1, 1').

9. A device as claimed in any one of the preceding claims, characterised by being applied to a folding door (1).

10. A device as claimed in any one of claims 1 to 8, characterised by being applied to a door (1') comprising rotary-sliding leaves (15).

## Patentansprüche

1. Vorrichtung zur Betätigung und Führung einer Fahrzeugtür (1), mit einer Stützkonstrukion (23), die im oberen Bereich des Türaufnahmeraumes (22) an einer Seite der Karosserie des Fahrzeugs zu montieren ist, wenigstens einem pneumatischen Zylinder (21), der mit der Stützkonstruktion (23) verbunden ist und ein Schwenkgelenk (8) eines Blattes der Tür (1) dreht. Führungseinrichtungen, die unterhalb der Stützkonstruktion (23) befestigt sind und ein entsprechendes Führungselement (11) der Tür (1) verschiebbar aufnehmen, so daß dieses entlang einer Gleitfläche parallel zu der Karosserieseite geführt ist, und Einrichtungen (29,32,33) zum Befestigen der Führungseinrichtungen an der Stützkonstruktion (23), dadurch **gekennzeichnet**, daß die Führungseinrichtungen eine Abschnittsstange (30) umfassen, die mit einem Befestigungsbereich (31) und einem Führungsbereich (34) versehen ist, der einen Kanal (35) parallel zu und asymmetrisch in Bezug auf die Lähgssymmetrieebene (36,36') durch die Befestigungseinrichtungen (29,32,33) bildet, wobei eine Längsmittelfläche (37) des Kanals die Gleitfläche (13,17) des Führungselements (11) der Tür (1,1') bildet, welche Abschnittsstange (30) an der Stützkonstruktion (23) in zwei Positionen befestigt werden kann, deren eine um 180° gegen die andere um eine vertikal Achse gedreht ist, welche zwei Positionen zwei unterschiedliche Abstände (a,b) der Gleitfläche (13,17) zu dem Außenprofil der Karosserieseite (4) des Fahrzeugs ergeben.

2. Vorrichtung nach Anspruch 1, dadurch **gekennzeichnet**, daß die Befestigungseinrichtungen eine Anzahl von Bohrungen (29) umfassen, die in dem Befestigungsbereich (31) vorgesehen sind, sowie entsprechende Sitze (33) in der Stützkonstruktion (23) und Schrauben (32), die durch die Bohrungen hindurchgehen und in die Sitze (33) geschraubt sind.

3. Vorrichtung nach Anspruch 1 oder 2, dadurch **gekennzeichnet**, daß der Befestigungsbereich (31) im wesentlichen eine flache Form aufweist, daß der Führungsbereich (34) einen Querschnitt mit im wesentlichen der Form eines rechtwinkligen Trapezes aufweist, dessen kleinere Grundlinie nach unten gerichtet ist, und daß der Kanal (35) entsprechend zu diesem ausgebildet ist.

4. Vorrichtung nach einem der vorhergehenden Ansprüche, dadurch **gekennzeichnet**, daß zwei Streifen (44) mit geringem Reibungskoeffizienten innen auf den Seiten des Kanals (35) angeordnet sind und mit dem Führungselement (11) der Tür (1,1') zusammenwirken.

5. Vorrichtung nach einem der vorhergehenden Ansprüche, dadurch **gekennzeichnet**, daß die Bohrungen (29) in zwei parallelen Reihen entlang der seitlichen Bereiche des Befestigungsbereichs (31) angeordnet sind, die von dem Führungsbereich (34) der Abschnittsstange (30) vorspringen.

6. Vorrichtung nach einem der vorhergehenden Ansprüche, dadurch **gekennzeichnet**, daß die Stützkonstruktion eine im wesentlichen flache, kastenförmige Stützbasis (23) aufweist.

7. Vorrichtung nach Anspruch 6, dadurch **gekennzeichnet**, daß die Sitze (33) eine Anzahl von Durchgangsbohrungen (40) aufweisen, die in der unteren Wand (39) der Stützbasis (23) angeordnet sind, und eine Anzahl von entsprechenden Gewindemuttern (41), die an die Innenseite der Wand (39) ensprechend den Bohrungen (41) geschweißt sind.

8. Vorrichtung nach einem der vorhergehenden Ansprüche, dadurch **gekennzeichnet**, daß zwei Zylinder (21) zur Betätigung der Halbtüren (2,15) der Tür (1,1') vorgesehen sind.

9. Vorrichtung nach einem der vorhergehenden Ansprüche, dadurch **gekennzeichnet**, daß sie für eine Falttür (1) verwendet wird.

10. Vorrichtung nach einem der Ansprüche 1 bis 8, dadurch **gekennzeichnet**, daß sie für eine Tür (1') mit drehbar gleitenden Blättern (15) verwendet wird.

**Revendications**

1. Un dispositif de manoeuvre et de guidage d'une porte de véhicule (1), du type comprenant une structure de support (23), à monter dans la partie supérieure du compartiment formant carter de logement de porte (22) monté sur un côté de la caisse dudit véhicule, au moins un cylindre pneumatique (21) relié à ladite structure de support (23) et agencé pour faire tourner le pivot d'articulation (8) d'un battant de ladite porte (1), des moyens de guidage fixés à la partie inférieure de ladite structure de support (23) et susceptibles d'abriter un élément de guidage correspondant (11), monté glissant, de ladite porte (1) de manière à le guider le long d'une surface de glissement parallèle audit côté de caisse, et des moyens (29, 32, 33) pour fixer lesdits moyens de guidage sur ladite structure de support (23), caractérisé en ce que lesdits moyens de guidage comprennent une barre profilée (30) comprenant une partie de fixation (31) et une partie de guidage (34) définissant un profilé en U (35), parallèle et asymétrique par rapport au plan longitudinal de symétrie (36, 36') traversant lesdits moyens de fixation (29, 32, 33), une surface médiane longitudinale (37) dudit profilé en U définissant ladite surface de glissement (13, 17) dudit élément de guidage (11) de ladite porte (1, 1'), ladite barre profilée (30) pouvant être fixée sur ladite structure de support (23) en deux positions, l'une d'elles pouvant effectuer une rotation de 180° par rapport à l'autre, autour s'un axe vertical et définissant deux distances différentes (a, b) de ladite surface de glissement (13, 17) par rapport au profil extérieur dudit côté de caisse (4) dudit véhicule.

2. Un dispositif selon la revendication 1, caractérisé en ce que lesdits moyens de fixation comprennent une pluralité de trous (29) ménagés dans ladite partie de fixation (31), des sièges correspondants (33) étant prévus dans ladite structure de support (23), et des vis (32) traversant lesdits trous et vissées dans lesdits sièges (33).

3. Un dispositif selon la revendication 1 ou 2, caractérisé en ce que ladite partie de fixation (31) est de forme sensiblement plate, ladite partie de guidage (34) ayant, en coupe transversale, sensiblement la forme d'un trapèze rectangle dont la petite base est tournée vers le bas, vis-à-vis de laquelle ledit profilé en U (35) est monté.

4. Un dispositif selon l'une quelconque des précédentes revendications, caractérisé en ce qu'il comprend une paire de bandes plates (44) à faible coefficient de frottement, disposées à l'intérieur, sur les côtés dudit profité en U (35) et solidaires dudit élément de guidage (11) de la porte (1, 1').

5. Un dispositif selon l'une quelconque des précédentes revendications, caractérisé en ce que lesdits trous (29) sont disposés en deux rangées parallèles le long des zones latérales respectives de ladite partie de fixation (31) disposées en saillie par rapport à ladite partie de guidage (34) de ladite barre profilée (30).

6. Un dispositif selon l'une quelconque des précédentes revendications, caractérisé en ce que ladite structure de support comprend une face de support sensiblement plate (23) de la structure en caisson.

7. Un dispositif selon la revendication 6, caractérisé en ce que lesdits sièges (33) comprennent une pluralité de trous traversants (40) ménagés dans la paroi inférieure (39) de ladite base de support (23) et une pluralité d'écrous taraudés correspondants (41), soudés à l'intérieur de ladite paroi (39), en correspondance avec lesdits trous (41).

8. Un dispositif selon l'une quelconque des précédentes revendications, caractérisé en ce qu'il comprend deux cylindres (21) pour manoeuvrer les demi-portes respectives (2, 15) de ladite porte (1, 1').

9. Un dispositif selon l'une quelconque des précédentes revendications, caractérisé en ce qu'il est appliqué à une porte pliante (1).

10. Un dispositif selon l'une quelconque des précédentes revendications 1 à 8, caractérisé en ce qu'il est appliqué à une porte (1') comprenant des battants glissants rotatifs (15).

Fig.1

Fig.2

Fig. 3

Fig.5

Fig.4